# EUROPEAN PATENT SPECIFICATION

(11) **EP 3 478 504 B1**
(45) Date of publication and mention of the grant of the patent: **05.07.2023**
(21) Application number: 17749218.8
(22) Date of filing: 29.06.2017
(51) Int. Cl.: B41F 13/187, F16C 13/00

(54) **ELECTRICALLY CONDUCTIVE ROLLER FOR ROTOGRAVURE AND METHOD FOR MANUFACTURE**
ELEKTRISCH LEITENDE WALZE FÜR ROTATIONSTIEFDRUCK UND HERSTELLUNGSVERFAHREN
ROULEAU ÉLECTROCONDUCTRICE POUR ROTOGRAVURE ET PROCÉDÉ DE FABRICATION

(30) Priority: 30.06.2016 BE 201605542
(43) Date of publication of application: 08.05.2019
(73) Proprietor: Hannecard NV, B-9600 Ronse (BE)
(72) Inventor: LASSEEL, Sammy, 9340 Smetlede (BE); VIDTS, Dirk, 9600 Ronse (BE)
(74) Representative: Brantsandpatents bv
(86) International application number: PCT/IB2017/053921
(87) International publication number: WO 2018/002874

(56) References cited:
- EP-A1- 0 439 822
- EP-A1- 2 211 236
- WO-A1-03/037630
- WO-A1-2016/066233
- WO-A1-2016/076469
- DE-A1- 2 058 315
- US-A- 2 520 504
- US-A- 4 513 660
- US-A- 5 178 071
- US-A- 5 490 458
- US-A1- 2009 117 303

## Description

### TECHNICAL DOMAIN

The present invention relates to roller elements appropriate for industrial applications, such as for example impression rollers for electrostatically assisted (ESA) rotogravure printing techniques.

### BACKGROUND

Rollers are used in very demanding industrial environments that are subject to long-term use and high loads and tensions. A particular field of application for rollers is electrostatically assisted (ESA) rotogravure printing technique. Hereby, an impression roller is used as a component of a machine for rotogravure. This impression rollers is provided with an elastic tubular roller casing. This roller casing is supported by at least one impression element or supporting element on a central carrier or support. Hereby, said central carrier or said support apply a press force according to the press area. The corresponding printing technique is also called photogravure.

The principle of said impression roller is generally known, and is for example used for printing in large editions by means of a rotogravure press comprising such impression roller. The substrate is hereby printed by passing it over a engraving cylinder, while it is pressed by said impression roller. As a consequence, the ink or the other colouring agent that is present in the engraving holes of the engraving cylinder is transferred to the substrate.

A known problem with the rotogravure printing technique is that as a consequence of the adhesion forces and/or capillary forces, the ink or colouring agent is not always completely transferred from the engraving holes to the substrate, which leads to poor impression quality, with missing dots in the impression result. In order to eliminate the undesired effect, it is for example known from DE 20 58 315 to electrostatically load the surface of the impression roller. In this context, we speak about Electrostatic Assist (ESA). The electrostatic load that is present on the surface of the impression roller makes it possible that capillary forces are overcome and the ink/colouring agent is completely transferred to the substrate. This offers in particular better impression results, in case of a substrate with a inhomogeneous and/or rough surface, such as paper with coarse fibres.

When using an impression roller for ESA rotogravure, it is very important that the electric guiding profile over the roller surface is homogeneous, constant, controllable and predictable. Also, it is expected that the associated electric resistance profile is homogeneous and predictable. Only in this way, the transfer of electrostatic load can be carried out correctly and in a reliable way, with equivalent quality over the complete width of the roller.

Tension variations over the roller surface lead to differences in attraction force of the individual ink particles. In particular, when printing larger surfaces with an even colour, these difference become visible in the printed result, and tension difference can thus lead to visible colour and/or intensity differences on the printed substrate.

In US 4,364,313, a concept is described of an impression roller with a body that comprises an isolated cylindrical core and a layer of semiconductor material around the isolated core. A set of conducting elements are placed around the outside of the isolated core and are in contact with the semiconductor material. Each conductive element has an electric resistance of at least two orders of magnitude smaller than the layer of semiconductor material. By making different connections, one can adjust the electric resistance value of the impression roller. The disadvantage of the concept as described in US 4,364,313 is that it leads to a quite complex composition for the roller, complicating the fabrication of the roller. Moreover, the resistance profile is still partially inhomogeneous, and the resistance value set under an initial tension value does not remain constant, so that the resistance value as measured at an operational tension different from said initial tension can deviate from the initially measured resistance value.

WO 2016/066233 describes an electrostatic pressing device that comprises amongst other things a photoguiding element and an intermediate transfer element. The photoguiding element has an adapted surface onto which a latent electrostatic image can be formed. The intermediate transfer element has a loosening layer composed of amongst other things a basic polymer matrix and carbon nanotubes. The operation of the electrostatic pressing device consists of bringing the surface of the photoguiding element, provided with a latent electrostatic image, into contact with an electrostatic ink composition. This leads to a toner image (or ink image) on top of the latent electrostatic image. This toner image is then transferred to a portion of the intermediate transfer element, and subsequently from there to a substrate. The concept described in WO 2016/066233 has the disadvantage that it cannot be used in ESA rotogravure. In said concept, the electrostatic load is indeed used as a channel for transferring the image information, in the form of a latent electrostatic image. As a result, the concept is not compatible with the principle of ESA rotogravure, because the assisting of the transfer of the image by means of electrostatic load would deform the actual image information or even delete it completely. This problem of deformation/deletion does not occur in ESA rotogravure, because the image information is not transferred by the electrostatic load, but on the contrary by means of engraving holes. Moreover, the carbon nanotubes that are present in said loosening layer have a completely different function than the carbon nanotubes that are present in embodiments of the present invention. More in particular, the use of carbon nanotubes in WO 2016/066233 is limited to the improvement of the microscopic surface roughness of the loosening layer, so that it better allows to temporary hold the ink/colouring agent. The impact of the presence of carbon nanotubes on the electric conductivity, an important notion in the present invention, is completely ignored in WO 2016/066233 because it is irrelevant for the described concept.

EP 0439 822 describes a press cylinder for photogravure.

There is a need for a better device and an improved method for ESA rotogravure by means of an impression roller. There is also a need for an simpler and more reliable way of fabricating an impression roller for ESA rotogravure. The present invention comprises an improved roller, an improved roller surface and an improved method for fabricating an impression roller offering a solution of at least one of the said disadvantages of know impression rollers.

### SUMMARY OF THE INVENTION

The invention offers an improved device for an impression rollers for electrostatically assisted (ESA) rotogravure printing technique, as well as the use of carbon nanotubes for improving roller elements that are appropriate for industrial applications. Here, the term "roller element" is a generic name for rollers that are appropriate for use in industrial applications, including impression rollers that are appropriate for ESA rotogravure. Hereby, the suggested impression roller of the corresponding roller element can for example be better used as a component of a machine for rotogravure. In a preferred embodiment, the impression roller or the roller element is provided with an elastic tubular roller casing with a roller surface or roller element surface. The roller casing is supported by at least one impression element or supporting element supported on a central carrier or support. Hereby, said central carrier or said support apply in a preferred embodiment a press force according to the pression area. When using the roller element for ESA rotogravure, in which case the roller element is an impression roller, the substrate is printed by having it pass over an engraving cylinder, while it is pressed by said impression roller. As a consequence, the ink or the other colouring agent that is present in the engraving holes of the engraving cylinder is transferred to the substrate. To be sure that the ink or colouring agent that is present in the engraving holes, is transferred as completely as possible to the substrate, the surface of the impression roller is electrostatically loaded. In order to carry out this load and transfer of load as controlled as possible, it is important to have good control over the resistance value at the production of the impression roller. Moreover, both the continuous character of rotogravure and the fact that one has to work with high control tensions, typically 100 V, 500 V or 1000 V, leads to high mechanical and thermal stress on the impression roller or the roller element and the roller surface or roller element surface.

In a first aspect, the invention relates to an impression roller that is appropriate for ESA rotogravure, in which the impression roller is provided with a stiff and essentially cylindrical roller core that is provided at its casing with an elastic and electrically guiding impression surface; in which said impression surface comprises a basic polymer matrix and an amorphous carbon and/or graphite and in which said impression surface comprises carbon nanotubes (CNT).

A first advantage of the present concept and the use of carbon nanotubes is the improved predictability and controllability of the electric conductivity during the production. As a result of the combination of a basic polymer matrix, in a preferred embodiment a polyurethane combined with an amorphous carbon in powder form, and a certain amount of carbon nanotubes, in a preferred embodiment multi-walled carbon nanotubes, a nanocomposite is obtained that is extremely appropriate for the application in ESA rotogravure. Contrary to the solutions that are known in the state of the art, the impression rollers, the roller element and the related method offer a more precise controllable conductivity. The precise roller surface resistance can be set by varying the concentration of carbon nanotubes, in which increasing concentrations correspond to increasing conductivity. The settablity is important, as different producers of rotogravure-pressing-systems use different control tensions. Also, the conductivity that is finally obtained can be better predicted. According to an embodiment, the variation in roller surface resistance Ro is below 10% for a control tension over the range 50 volt to 2000 volt, and preferably below 5% over the range 100 volt to 1000 volt. Contrary to the solutions known from the state of the art, there is thus little variation in the resistance value depending on the control tension. Also, the homogeneity of the surface resistance is larger. Moreover, the roller surface resistance is also essentially constant depending on the temperature, however within the normal working area. The strongly controlled electric conductive properties also allow to work at a lower control tension than the usual values 100 V, 500 V or 1000 V, preferably lower than 95 Volt. Hereby, one should notice that said control tensions are used at the control, while the working tensions are higher.

A second advantage of the present concept and the use of carbon nanotubes is the improved mechanical and related properties, which is important for practical use. In a preferred embodiment, the roller or the roller element keeps its functionality under grinding and polishing, and this thanks to the larger homogeneity in the roller surface or the roller element surface. This has advantages when making the impression roller or the roller element, but it also has advantages in use. This means that the possible planing down of portions of the surface does not hinder the good operation for for example ESA rotogravure. This is also made possible by the use of carbon nanotubes. Indeed, this allows to improve different properties of the impression roller or the roller element without compromising the homogeneity of the impression surface or roller element surface. In a preferred embodiment, the impression roller or the roller element according to the present invention thus comprises a homogeneity in the impression surface for keeping its functionality when planing down, grinding and polishing. Preferably, said impression roller or said roller element comprises said homogeneity in the impression surface or roller element surface over at least 80%, more preferably over at least 90% of its impression surface of roller element surface. Hereby, said impression roller or said roller element comprises a depth direction transverse to said impression surface or roller element surface, and said homogeneity in the impression surface or roller element surface extends over a particular depth according to the depth direction. Preferably, the depth is at least 1 mm, more preferably at least 2 mm, most preferably at least 5 mm.

The grinding and polishing is necessary to obtain an even and smooth surface in which the roller or the roller element had the same circumference over the complete length of the roller or the roller element. Thanks to the advantageous properties of the nanocomposite, the impression roller or the roller element has in a preferred embodiment also the characteristic that it elastically springs back after deformation, and that it is resistant to liquids with possible biting effect, such as conventional water- and solvent-based impression ink for ESA rotogravure.

A third advantage of the present concept and the use of carbon nanotubes is the improved thermal properties. Thanks to the larger and more predictable thermal conductivity of the used nanocomposite, a portion of the impression roller or the roller element in the vicinity of the impression surface or roller element surface has in a preferred embodiment a DIN 52612 thermal conductivity of at least 0.4 W/(m•K), preferably at least 1 W/(m•K). This means that the roller or the roller element can remove internal heat more easily, and thus will overheat not so quickly at intensive use. This is advantageous, in particular because this can avoid that an installation must be stopped temporary to avoid overheating. This further offers a larger freedom when setting process parameters. The heating the roller or the roller element has a negative influence on for example the drying of the ink in the impression roller of the roller element and should therefore be avoided as much as possible.

In a second aspect, the present invention offers a method for fabricating an impression roller for ESA rotogravure as described in the present document, in which said method comprises the following successive steps:
(a) mixing a batch of polyol with a batch of carbon powder, a batch of isocyanate, a batch of carbon nanotubes (CNT), preferably multi-walled carbon nanotubes (MWCNT), for obtaining a mix;
(b) providing a pouring arrangement comprising a stiff, essentially cylindrical roller core or a stiff essentially cylindrical roller casing matrix, an essentially cylindrical mould and an essentially tubular flexible supply tube comprising a pouring mouth, in which said mould is positioned vertically, in which said mould has a recess at the top and a floor at the bottom, in which said roller core or roller casing matrix is positioned vertically in said mould and this essentially concentrically with respect to said mould, in which said supply tube hangs down along said recess and in which said pouring mouth is located in the vicinity of said floor;
(c) pouring said mix in said mould along said recess, and this essentially at a constant flow, combined with partially pulling up said supply tube so that said pouring mouth remains in the vicinity of an upper plane of said mix, for obtaining a pre-product;
(d) having said pre-product cure;
(e) removing said pre-product from said mould along said recess, and replacing said roller casing matrix if present by a roller thorn;
(f) grinding and polishing the surface of said pre-product, for obtaining an impression roller for ESA rotogravure.

An advantage of the present invention at both the third and the fourth aspect is that the pouring of said mix is carried out gradually, and this in the vicinity of the upper surface of the mix. In this way, the appearance of air bubbles in the mass of the mix is avoided. This is crucial, as the pot life of the mix is limited, and it typically still cures before possibly generated air bubbles can rise to the surface under the influence of the force of Archimedes. The presence of air bubbles in the end product is disadvantageous for the electric, mechanical and thermal properties at the obtained impression roller or roller casing, and must therefore be avoided as much as possible.

In a fourth aspect, the present invention provides for a use of an impression roller as described in the present document, in which the impression roller is pressed against a substrate while said substrate passes along a conductive engraving cylinder corresponding the principle of rotogravure, in which said impression roller is electrostatically loaded corresponding the principle of electrostatically assisted (ESA) rotogravure.

A fifth aspect of the present invention relates to the use of a roller according to the present invention for ESA rotogravure at lower control tension than 100 volt, preferably lower than 95 volt. An advantage of a lower control tension is the higher security for the operators and the reduced wear for conductive components that are sensitive to high tensions.

In a sixth aspect, the present invention offers a method for assembling a mix for fabricating an impression roller as described in the present document, in which said method comprises the following successive steps:
(A) mixing a batch of polyol with a batch of carbon powder, for obtaining a pre-mix;
(B) mixing said batch of pre-mix with a batch of isocyanate and a batch of carbon nanotubes (CNT), preferably multi-walled carbon nanotubes (MWCNT), for obtaining a mix;

The advantage of this order is the control of the complete mixing of all components, while the maximum pot life of the separately obtained prix-mixes is never exceeded. In a preferred embodiment, the mixing occurs under controlled pressure and controlled temperature, preferably in vessels with mixers with sufficiently high revolutions speeds, to obtain the definitive mix from the pre-mix as quickly as possible.

An eighth aspect of the present invention relates to a use of carbon nanotubes (CNT) in a roller element surface belonging to a roller element, in which said roller element comprises a homogeneity in the roller element surface over at least 80% of the roller element surface for a depth of at least 1 mm, for ensuring superior physical and/or mechanical and/or chemical properties.

The advantage of the use of carbon nanotubes in a roller element surface is that the presence of the carbon nanotubes leads to a more qualitative roller element, with superior properties as those described in the present document. Some examples of superior physical properties are the better electrical conductivity, the better controllability of this conductivity, the better UV resistance, and the improved thermal conductivity preferably higher than 1 W/(m•K). Some examples of superior mechanical properties are the improved visco-elastic properties, the improved hardness and the elastic springing-back after deformation. An example of a superior chemical characteristic is the improved resistance and/or inertia of the surface of the roller element in case of contact with liquids with a possibly biting effect, such as water- or solvent-based impression inks. Hereby, it is clear that most of the properties, such as for example an improved UV-resistance and a superior thermal conductivity, are generally advantageous for each roller element that is appropriate for industrial applications, and thus not only for an impression roller that is appropriate for ESA rotogravure. Hereby, the industrial applications preferably relate to the processing, treating or transporting of goods. Examples of industrial applications are ESA rotogravure; dosing and/or applying coatings of for example paint or varnish; winding and/or transporting a web of material such as for example paper, carboard, plastic film en foil; and transporting individual objects. Depending on the application, the roller can be driven externally or not externally.

Further details of preferred embodiments are described in the claims.

### DETAILED DESCRIPTION

"A", "an" and "the" refer in the document to both the singular and the plural form unless clearly understood differently in the context. "A roller" means for example one or more than one roller.

The terms "include", "including", "consist", "consisting", "provide with", "contain", "containing", "comprise", "comprising" are synonyms and are inclusive of open terms that indicate the presence of what follows, and that do not exclude or prevent the presence of other components, properties, elements, members, steps, known from or described in the state of the art.

In the present invention, the term "roller" also means "cylinder", and the terms "impression roller", "impression cylinder" and "print drum" are interchangeable. The term "ESA" is an abbreviation for Electrostatic Assist, "CNT" is an abbreviation for carbon nanotube, "MWCNT" is an abbreviation for multi-walled carbon nanotube. In the context of this document, the terms "electric roller surface resistance" and "roller surface resistance" are used interchangeably:
The citation of numeric intervals by means of end points includes all integers, fractions and/or real numbers between the end points, including these end points.

Unless otherwise specified, all terms used in the description of the invention, including technical and scientific terms, shall have the meaning as they are generally understood by the worker in the technical field of the invention.

A typical design of a roller or roller element starts from a hollow or filled metal roller core. On the casing of this roller core, a roller surface or roller element surface is applied or not, and this supplementary with respect to the roller surface or roller element surface of the roller core, which is further not considered. On the one hand, this roller surface or roller surface element can consist of a growth on the roller core, by deposition of polymers on the surface of the roller. On the other hand, this roller surface or roller element surface can be applied to the roller core as a prefabricated roller casing, by providing a high air pressure at the casing of the roller core via air openings and sliding an under the influence of this air pressure expanded roller casing over the roller core.

When choosing the roller surface or roller element surface, one opts for a material and surface finishing that are appropriate for the particular application. In a preferred embodiment of the present invention, the impression roller or the roller element comprises a separately produced roller casing. In an alternative embodiment, the impression roller or the roller element comprises a fixedly connected roller core, and the impression surface or roller element surface is a growth on this roller core. Furthermore, the roller surface comprises amorphous carbon (such as carbon powder) and/or graphite, because of several advantages. More generally, the roller element preferably comprises amorphous carbon (such as carbon poser) and/or graphite. First of all, this addition improves the electric conductivity. Secondly, it facilitates grinding of the pre-product for obtaining a finished roller or a finished roller element. Thirdly, this addition leads to a more qualitative roller or a more qualitative roller element, with smoother and more regular roller surface or roller element surface.

In an embodiment of the present invention, the impression roller or the roller element is provided with a stiff cylindrical hollow or filled roller core, at at least one of its end provided with bearing-axis-taps, enclosed by a roller surface or roller element surface, in a more or less equal thickness radially to the outer surface of the roller core, in which the ratio of the diameter of the roller core to the length of the roller core is preferably situated between 0.02 and 0.50, more preferably between 0.04 and 0.2 and most preferably between 0.05 and 0.15. Under said ratio of the diameter of the roller core to the length of the roller core, a self-supporting roller core at an end becomes possible.

In a preferred embodiment, an impression surface or roller element surface according to the present invention disposes of a controlled hardness between 60 Shore A and 100 Shore A, more preferably between 70 Shore A and 90 Shore A, most preferably between 80 Shore A and 90 Shore A.

In a preferred embodiment, an impression surface of an impression roller or a roller element surface of a roller element according to the present invention disposes of advantageous visco-elastic properties. This corresponds to a low tangent-delta value, a variable defined as the ratio of the elasticity modulus and the loss modulus of the material. This variable is an measure for the energy absorption during vibrating movement, more in particular the extent to which the material converts kinetic energy into Joule heat.

In a preferred embodiment of the present invention, the impression roller and the impression surface are resistant to conventional water- and solvent-based printing inks for ESA rotogravure. Also, the roller element and the roller element surface are preferably resistant to liquids with possible biting effect, such as conventional water- and solvent-based printing inks used in ESA rotogravure. This comprises all traditional inks in which pigment is dispersed in a water- or solvent-based solution. This has the advantage that the roller or the roller element is ready for use in combination with inks of different producers, without having to check the formula of the ink. This is not only useful, but in some cases it is also necessary, for example because the formulation of inks is not publicly known.

For each of said application, the roller or roller element surface is at long-term used subject to abrasion, corrosion, adhesive wear, surface fatigue, erosion, fretting, chemical attack, electric high-tension, temperature fluctuations and other wear-related factors.
- If the roller surface or roller element surface is a separately produced roller casing, it can easily be slit from the roller core and be replaced by a new roller casing. Hereby, the complete roller or the complete roller element must thus not be repaired or replaced, but only the roller casing.
- If the roller surface or the roller element surface is a growth on the roller core, it should be removed from the roller core, either mechanically, or chemically, after which the roller core is sandblast or not, after which a new roller surface or roller element surface can be applied to the roller core. Also in this case, the complete roller or the complete roller element must thus not be repaired or replaced, but only the roller surface or roller element surface. In a preferred embodiment, a binding primer is applied between the roller core and the new roller surface or roller element surface.

As said in the summary, different producers of the rotogravure impression system comprising an impression roller or roller element, use different control tensions. Typical values for the control tension are 100 V, 500 V and 1000 V. In an embodiment of the present invention, the impression roller or the roller element is however appropriate for the whole range of control tensions between 100 and 1000 V, and preferably even broader. This difference in control tension does however typically lead to another preferred setting for the electric roller surface resistance, only increasing the need for a controllable setting of the resistance during production, for producing rollers or roller elements for diverse control tensions in a similar way.

The roller surface resistance is expressed in Ohm. This is measured by means of a resistance meter adapted for measuring the surface resistance of rollers or roller elements. In a preferred embodiment, when measuring a control tension of 100 V, said roller or said roller element shows a roller surface resistance Ro between 0.1 mega-ohm and 10 mega-ohm, preferably between 0.5 mega-ohm and 5 mega-ohm. For a control tension of 100 V, these numeric values should be interpreted as measured with a ELTEX tera-ohm-meter type 6206 and a ELTEX measuring bow type 6220, or similar. For other control tensions, corresponding apparatus should be set accordingly. Typically, the contact points of the measuring bow are moistened with water before use. The measurement should be carried out at the temperature as specified by a certificate that said impression roller or said roller element accompanies. The measurement should typically be carried out at three places of the roller surface or the roller element surface belonging to the roller casing, namely in the vicinity of each of both ends, and in the middle.

The impression surface of the impression roller is composed of a polymer matrix nanocomposite, comprising a polymer matrix, in which diverse components are dissolved, including nanoparticles. The roller element surface of the roller element is preferably composed of a polymer matrix nanocomposite, comprising a polymer matrix, in which diverse components are dissolved, including nanoparticles. The presence of carbon nanotubes, and in particular multi-walled carbon nanotubes has an important influence on the conductivity, but also provides for an improvement of the mechanical and thermal properties of the impression surface of the impression roller or the roller element surface of the roller element. A relevant document in this context is the publication of Singh et al. (Singh, BP; Singh, Deepankar; Mathur, R. B.; Dhami, T. L. (2008); "Influence of Surface Modified MWCNTs on the Mechanical, Electrical and Thermal Properties of Polyimide Nanoconnposites"; Nanoscale Research Letters 3 (11): 444-453). The document present the analysis and properties of two polyimide-based polymer-matrix nanocomposites for MWCNT, designated as acid-MWCNT and amide-MWCNT. The addition of MWCNT entails a reported improvement in thermal stability, an improvement in tensile stress of 50%, as well as an improvement of the elasticity modulus (modulus of Young) with 35%, and an unseen high conductivity for polyimide composites, namely 0.938 S/cm (5 wt% acid-MWCNTs) and 1,032 S/cm (5 wt% amide-MWCNTs). Just like with many other nanocomposites, the addition of CNT also provides an improvement in the thermal conductivity. A known application for the materials studied by Singh et al. is high-temperature EMI shielding, because of the combination of electric conductivity and thermal stability. The use of such nanocomposite has however never been presented for impression rollers or roller elements, despite the fact that all said properties are extremely desired for an impression roller or roller element as described in the present invention. Accordingly, the composition of the proposed nanocomposites is not appropriate for impression surfaces or roller element surfaces, amongst other things because they do not comprise amorphous (i.e. non-crystalline) carbon (such as carbon powder) and/or graphite. Another relevant document is of Athanasopoulos et al. (N. Athanasopoulos, A. Baltopoulos, M. Matzakou, A. Vavouliotis, V. Kostopoulos (2012); "Electrical conductivity of polyurethane/MWCNT nanocomposite foams"; Polymer Composites 33(8): 1302-1312). This document describes an analysis of nanocomposite foams composed of PUR and MWCNT, in variable ratio, as well as the influence of the ratio on the electric conductivity. Also in this document, the particular advantages of the use of MWCNT in a polymer matrix are described in detail, but the application for impression rollers, roller elements or similar applications is not considered. Accordingly, the composition of the proposed nanocomposites is also in this document not appropriate for impression surfaces or roller element surfaces, amongst other things because they do not comprise amorphous carbon and/or graphite. In a preferred embodiment, an impression roller or roller element according to the present invention disposes of superior UV-resistance. This is amongst other things due to the increased electromagnetic and thermal conductivity of the impression roller or the roller element, both conductivity aspects that help to reduce possible damage through UV light.

In a preferred embodiment, the roller or the roller element disposes of advantageous thermal properties. Thanks to the excellent thermal conductivity higher than 1 W/(m•K), less heat is accumulated in said impression roller or said roller element during use. This value is significantly larger than the thermal conductivity of polyurethane in foam form, which is ca. 0.2 W/(m•K). This is partially understandable through the superior conductivity of MWCNT in pure shape, which can amount to 3000 W/(m•K) (P. Kim, L. Shi, A. Majumdar, and P. L. McEuen (2001); "Thermal Transport Measurements of Individual Multiwalled Nanotubes"; Phys. Rev. Lett. 87, 215502.)

## Claims

1. . An impression roller that is appropriate for an electrostatically assisted (ESA) rotogravure, in which the impression roller is provided with a stiff and essentially cylindrical roller core that is provided at its casing with an elastic and electrically guiding impression surface; in which said impression surface comprises a basic polymer matrix, **characterized in that** said impression surface comprises an amorphous carbon and/or graphite, **in that** said impression surface comprises carbon nanotubes (CNT), and **in that** said carbon nanotubes comprise multi-walled carbon nanotubes (MWCNT).

2. . An impression roller according to claim 1, **characterized in that** said impression roller has a roller surface resistance Ro between 0.1 mega-ohm and 10 mega-ohm, preferably between 0.5 mega-ohm and 5 mega-ohm.

3. . An impression roller according to any of the previous claims 1-2, **characterized in that** said impression roller has a variation in roller surface resistance Ro below 10 % for a control tension over the range 50 volt to 2000 volt, and preferably below 5% over the range 100 volt to 1000 volt.

4. . An impression roller of any of the previous claims 1-3, **characterized in that** said impression roller comprises a homogeneity in the impression surface, preferably over at least 80% of the impression surface for a depth of at least 1 mm, for keeping its functionality under planing down, grinding and polishing.

5. . An impression roller of any of the previous claims 1-4, **characterized in that** a portion of the impression roller in the vicinity of the impression surface has a DIN 52612 thermal conductivity of at least 0.4 W/(m•K), preferably at least 1 W/(m•K).

6. . An impression roller of any of the previous claims 1-5, **characterized in that** said impression surface has a hardness between 60 Shore A and 100 Shore A, more preferably between 70 Shore A and 90 Shore A, most preferably between 80 Shore A and 90 Shore A.

7. . Method for fabricating an impression roller or roller sleeve for an electrostatically assisted (ESA) rotogravure of any of the previous claims 1-6, in which said method comprises the following successive steps:
(a) mixing a batch of polyol with a batch of carbon powder, a batch of isocyanate, a batch of carbon nanotubes (CNT), comprising multi-walled carbon nanotubes (MWCNT), for obtaining a mix;
( b ) providing a pouring arrangement comprising a stiff, essentially cylindrical roller core or a stiff essentially cylindrical roller sleeve matrix, an essentially cylindrical mould and an essentially tubular flexible supply tube comprising a pouring mouth, in which said mould is positioned vertically, in which said mould has a recess at the top and a floor at the bottom, in which said roller core or roller sleeve matrix is positioned vertically in said mould and this essentially concentrically with respect to said mould, in which said supply tube hangs down along said recess and in which said pouring mouth is located in the vicinity of said floor;
(c) pouring said mix in said mould along said recess, and this essentially at a constant flow, combined with partially pulling up said supply tube so that said pouring mouth remains in the vicinity of an upper plane of said mix, for obtaining a pre-product;
( d ) having said pre-product cure;
( e ) removing said pre-product from said mould along said recess, and replacing said roller sleeve matrix if present by a roller thorn;
( f ) grinding and polishing the surface of said pre-product, for obtaining an impression roller for ESA rotogravure.

8. . Use of an impression roller of any of the previous claims 1-6, in which the impression roller is pressed against a substrate while said substrate passes along a conductive engraving cylinder corresponding the principle of rotogravure, in which said impression roller is electrostatically loaded corresponding the principle of electrostatically assisted (ESA) rotogravure.

9. . Use of an impression roller of any of the previous claims 1-6 for an electrostatically assisted (ESA) rotogravure at lower control tension than 100 volt, preferably lower than 95 volt.

10. . Method for assembling a mix for fabricating an impression roller of any of the previous claims 1-6, in which said method comprises the following successive steps:
(A) mixing a batch of polyol with a batch of carbon powder, for obtaining a pre-mix, whereby said carbon powder comprises amorphous carbon;
(B) mixing said batch of pre-mix with a batch of isocyanate and a batch of carbon nanotubes (CNT), comprising multi-walled carbon nanotubes (MWCNT), for obtaining a mix.

11. . Use of multi-walled carbon nanotubes (MWCNT) in an impression roller of any of the previous claims 1-6 belonging to an impression roller, in which said impression roller comprises a homogeneity in the roller element surface over at least 80% of the impression roller surface for a depth of at least 1 mm.

12. . Use according to claim 12, **characterized in that** said impression roller surface is electrically conductive and that said roller element has a roller surface resistance Ro between 0.1 mega-ohm and 10 mega-ohm, preferably between 0.5 mega-ohm and 5 mega-ohm.

13. . Use according to any of claims 11-12, **characterized in that** said impression roller has a variation in impression roller resistance Ro below 10% for a control tension over the range 50 volt to 2000 volt, and preferably below 5% over the range 100 volt to 1000 volt.

## Patentansprüche

1. Presseur, der für einen elektrostatisch unterstützten (ESA) Rotationstiefdruck geeignet ist, wobei der Presseur mit einem steifen und im Wesentlichen zylinderförmigen Walzenkern versehen ist, der an seinem Überzug mit einer elastischen und elektrisch führenden Presseuroberfläche versehen ist, wobei die Presseuroberfläche eine Basispolymermatrix umfasst, **dadurch gekennzeichnet, dass** die Presseuroberfläche einen amorphen Kohlenstoff und/oder Graphit umfasst, dadurch, dass die Presseuroberfläche Kohlenstoffnanoröhrchen (CNT) umfasst, und dadurch, dass die Kohlenstoffnanoröhrchen mehrwandige Kohlenstoff-Nanoröhrchen (MWCNT) umfassen.

2. Presseur nach Anspruch 1, **dadurch gekennzeichnet, dass** der Presseur einen Walzenoberflächenwiderstand Ro zwischen 0,1 Megaohm und 10 Megaohm aufweist, vorzugsweise zwischen 0,5 Megaohm und 5 Megaohm.

3. Presseur nach einem der vorhergehenden Ansprüche 1 bis 2, **dadurch gekennzeichnet, dass** der Presseur für eine Steuerspannung in dem Bereich von 50 Volt bis 2000 Volt eine Schwankung im Walzenoberflächenwiderstand Ro von unter 10 % aufweist und in dem Bereich von 100 Volt bis 1000 Volt vorzugsweise von unter 5 %.

4. Presseur nach einem der vorhergehenden Ansprüche 1 bis 3, **dadurch gekennzeichnet, dass** der Presseur für eine Tiefe von mindestens 1 mm eine Homogenität in der Presseuroberfläche umfasst, vorzugsweise über mindesten 80 % der Presseuroberfläche, um seine Funktionalität beim Glätten, Abschleifen und Polieren zu erhalten

5. Presseur nach einem der vorhergehenden Ansprüche 1 bis 4, **dadurch gekennzeichnet, dass** ein Abschnitt des Presseurs in der Nähe der Presseuroberfläche ein Wärmeleitvermögen nach DIN 52612 von mindestens 0,4 W/(m•K) aufweist, vorzugsweise von mindestens 1 W/(m•K).

6. Presseur nach einem der vorhergehenden Ansprüche 1 bis 5, **dadurch gekennzeichnet, dass** die Presseuroberfläche eine Härte zwischen 60 Shore A und 100 Shore A aufweist, vorzugsweise zwischen 70 Shore A und 90 Shore A, am meisten bevorzugt zwischen 80 Shore A und 90 Shore A.

7. Verfahren zum Herstellen eines Presseurs oder einer Walzenhülle für einen elektrostatisch unterstützten (ESA) Rotationstiefdruck nach einem der vorhergehenden Ansprüche 1 bis 6, wobei das Verfahren die folgenden aufeinanderfolgenden Schritte umfasst:
(a) Mischen einer Partie Polyol mit einer Partie Kohlenstoffpulver, einer Partie Isocyanat, einer Partie Kohlenstoffnanoröhrchen (CNT), die mehrwandige Kohlenstoffnanoröhrchen (MWCNT) umfassen, um eine Mischung zu gewinnen,
(b) Bereitstellen einer Gießanordnung, die einen steifen, im Wesentlichen zylinderförmigen Walzenkern oder eine steife, im Wesentlichen zylinderförmige Walzenhüllenmatrix umfasst, eine im Wesentlichen zylinderförmige Gießform und ein im Wesentlichen röhrenförmiges flexibles Zufuhrrohr, das eine Gießmündung umfasst, wobei die Gießform vertikal positioniert wird, wobei die Gießform an der Oberseite eine Vertiefung und an der Unterseite einen Boden umfasst, wobei der Walzenkern oder die Walzenhüllenmatrix vertikal in der Gießform positioniert werden und dies im Wesentlichen konzentrisch im Verhältnis zu der Gießform, wobei das Zufuhrrohr entlang der Vertiefung nach unten hängt und wobei die Gießmündung in der Nähe des Bodens angeordnet wird,
(c) Gießen der Mischung in die Gießform entlang der Vertiefung und dies im Wesentlichen mit konstantem Fluss, kombiniert mit teilweisem Hochziehen des Zufuhrrohrs derart, dass die Gießmündung in der Nähe einer oberen Ebene der Mischung bleibt, um ein Vorprodukt zu gewinnen,
(d) Härten-Lassen des Vorprodukts,
(e) Entnehmen des Vorprodukts aus der Gießform entlang der Vertiefung und Ersetzen der Walzenhüllenmatrix, falls vorhanden, durch einen Walzendorn,
(f) Schleifen und Polieren der Oberfläche des Vorprodukts, um einen Presseur für einen ESA-Rotationstiefdruck zu gewinnen.

8. Verwendung eines Presseurs nach einem der vorhergehenden Ansprüche 1 bis 6, wobei der Presseur gegen ein Substrat gepresst wird, während das Substrat entsprechend dem Prinzip des Rotationstiefdrucks an einem leitenden Gravurzylinder entlang läuft, wobei der Presseur entsprechend dem Prinzip des elektrostatisch unterstützten (ESA) Rotationstiefdrucks elektrostatisch geladen wird.

9. Verwendung eines Presseurs nach einem der vorhergehenden Ansprüche 1 bis 6 für einen elektrostatisch unterstützten (ESA) Rotationstiefdruck bei einer Steuerspannung von weniger als 100 Volt, vorzugsweise weniger als 95 Volt.

10. Verfahren zum Zusammenstellen einer Mischung zum Herstellen eines Presseurs nach einem der vorhergehenden Ansprüche 1 bis 6, wobei das Verfahren die folgenden aufeinanderfolgenden Schritte umfasst:
(A) Mischen einer Partie Polyol mit einer Partie Kohlenstoffpulver, um eine Vormischung zu gewinnen, wobei das Kohlenstoffpulver amorphen Kohlenstoff umfasst,
(B) Mischen der Partie der Vormischung mit einer Partie Isocyanat und einer Partie Kohlenstoffnanoröhrchen (CNT), die mehrwandige Kohlenstoffnanoröhrchen (MWCNT) umfassen, um eine Mischung zu gewinnen.

11. Verwendung mehrwandiger Kohlenstoff-Nanoröhrchen (MWCNT) in einem Presseur nach einem der vorhergehenden Ansprüche 1 bis 6, zu einem Presseur gehörend, wobei der Presseur eine Homogenität der Presseuroberfläche für eine Tiefe von mindestens 1 mm über mindestens 80 % der Presseuroberfläche umfasst.

12. Verwendung nach Anspruch 12, **dadurch gekennzeichnet, dass** die Presseuroberfläche elektrisch leitend ist und dass das Walzenelement einen Walzenflächenwiderstand Ro zwischen 0,1 Megaohm und 10 Megaohm aufweist, vorzugsweise zwischen 0,5 Megaohm und 5 Megaohm.

13. Verwendung nach einem der Ansprüche 11 bis 12, **dadurch gekennzeichnet, dass** der Presseur für eine Steuerspannung in dem Bereich von 50 Volt bis 2000 Volt eine Schwankung im Walzenflächenwiderstand Ro von unter 10 % aufweist und in dem Bereich von 100 Volt bis 1000 Volt vorzugsweise von unter 5 %.

## Revendications

1. Rouleau d'impression qui est approprié pour une rotogravure électrostatiquement assistée (ESA), dans lequel le rouleau d'impression est doté d'un noyau de rouleau rigide et essentiellement cylindrique qui est doté, au niveau de son enveloppe, d'une surface d'impression élastique et à guidage électrique ; dans lequel ladite surface d'impression comprend une matrice polymère basique, **caractérisé en ce que** ladite surface d'impression comprend un carbone et/ou graphite amorphe, **en ce que** ladite surface d'impression comprend des nanotubes de carbone (CNT), et **en ce que** lesdits nanotubes de carbone comprennent des nanotubes de carbone à multiples parois (MWCNT).

2. Rouleau d'impression selon la revendication 1, **caractérisé en ce que** ledit rouleau d'impression a une résistance de surface de rouleau Ro entre 0,1 méga-ohm et 10 méga-ohm, de préférence entre 0,5 méga-ohm et 5 méga-ohm.

3. Rouleau d'impression selon l'une quelconque des revendications 1 à 2 précédentes, **caractérisé en ce que** ledit rouleau d'impression a une variation de résistance de surface de rouleau Ro inférieure à 10 % pour une tension de commande sur la plage 50 volt à 2 000 volt, et de préférence inférieure à 5 % sur la plage 100 volt à 1 000 volt.

4. Rouleau d'impression selon l'une quelconque des revendications 1 à 3 précédentes, **caractérisé en ce que** ledit rouleau d'impression comprend une homogénéité dans la surface d'impression, de préférence sur au moins 80 % de la surface d'impression pour une profondeur d'au moins 1 mm, pour garder sa fonctionnalité sous planage, meulage et polissage.

5. Rouleau d'impression selon l'une quelconque des revendications 1 à 4 précédentes, **caractérisé en ce qu'**une partie du rouleau d'impression à proximité de la surface d'impression a une conductivité thermique DIN 52612 d'au moins 0,4 W/(m•K), de préférence d'au moins 1 W/(m•K).

6. Rouleau d'impression selon l'une quelconque des revendications 1 à 5 précédentes, **caractérisé en ce que** ladite surface d'impression a une dureté entre 60 Shore A et 100 Shore A, de manière davantage préférée entre 70 Shore A et 90 Shore A, de manière préférée entre toutes entre 80 Shore A et 90 Shore A.

7. Procédé de fabrication d'un rouleau d'impression ou d'un manchon de rouleau pour une rotogravure électrostatiquement assistée (ESA) selon l'une quelconque des revendications 1 à 6 précédentes, dans lequel ledit procédé comprend les étapes successives suivantes :
(a) mélange d'un lot de polyol avec un lot de poudre de carbone, un lot d'isocyanate, un lot de nanotubes de carbone (CNT), comprenant des nanotubes de carbone à multiples parois (MWCNT), pour obtenir un mélange ;
(b) fourniture d'un agencement verseur comprenant un noyau de rouleau rigide, essentiellement cylindrique, ou une matrice de manchon de rouleau rigide, essentiellement cylindrique, un moule essentiellement cylindrique et un tube d'alimentation flexible essentiellement tubulaire comprenant un orifice verseur, dans lequel ledit moule est positionné verticalement, dans lequel ledit moule a un évidement au niveau de la partie supérieure et un plancher au niveau de la partie inférieure, dans lequel ledit (ladite) noyau de rouleau ou matrice de manchon de rouleau est positionné(e) verticalement dans ledit moule, et ce essentiellement concentriquement par rapport audit moule, dans lequel ledit tube d'alimentation pend le long dudit évidement et dans lequel ledit orifice verseur est situé à proximité dudit plancher ;
(c) versage dudit mélange dans ledit moule le long dudit évidement, et ce essentiellement à écoulement constant, combiné avec une traction partielle vers le haut dudit tube d'alimentation de sorte que ledit orifice verseur reste à proximité d'un plan supérieur dudit mélange, pour obtenir un pré-produit ;
(d) durcissement dudit pré-produit ;
(e) retrait dudit pré-produit dudit moule le long dudit évidement, et remplacement de ladite matrice de manchon de rouleau, le cas échéant, par un éperon pour bobines;
(f) broyage et polissage de la surface dudit pré-produit, pour obtenir un rouleau d'impression pour rotogravure ESA.

8. Utilisation d'un rouleau d'impression selon l'une quelconque des revendications 1 à 6 précédentes, dans laquelle le rouleau d'impression est pressé contre un substrat tandis que ledit substrat passe le long d'un cylindre de gravure conducteur correspondant au principe de rotogravure, dans laquelle ledit rouleau d'impression est chargé électrostatiquement conformément au principe de rotogravure électrostatiquement assistée (ESA).

9. Utilisation d'un rouleau d'impression selon l'une quelconque des revendications 1 à 6 précédentes pour une rotogravure électrostatiquement assistée (ESA) à une tension de commande inférieure à 100 volt, de préférence inférieure à 95 volt.

10. Procédé d'assemblage d'un mélange pour fabriquer un rouleau d'impression selon l'une quelconque des revendications 1 à 6 précédentes, dans lequel ledit procédé comprend les étapes successives suivantes :
(A) mélange d'un lot de polyol avec un lot de poudre de carbone, pour obtenir un prémélange, moyennant quoi ladite poudre de carbone comprend du carbone amorphe ;
(B) mélange dudit lot de prémélange avec un lot d'isocyanate et un lot de nanotubes de carbone (CNT), comprenant des nanotubes de carbone à multiples parois (MWCNT), pour obtenir un mélange.

11. Utilisation de nanotubes de carbone à multiples parois (MWCNT) dans un rouleau d'impression selon l'une quelconque des revendications 1 à 6 précédentes appartenant à un rouleau d'impression, dans laquelle ledit rouleau d'impression comprend une homogénéité dans la surface d'élément de rouleau sur au moins 80 % de la surface du rouleau d'impression sur une profondeur d'au moins 1 mm.

12. Utilisation selon la revendication 12, **caractérisée en ce que** ladite surface du rouleau d'impression est électriquement conductrice et **en ce que** ledit élément de rouleau a une résistance de surface de rouleau Ro entre 0,1 méga-ohm et 10 méga-ohm, de préférence entre 0,5 méga-ohm et 5 méga-ohm.

13. Utilisation selon l'une quelconque des revendications 11 et 12, **caractérisée en ce que** ledit rouleau d'impression a une variation de résistance de rouleau d'impression Ro inférieure à 10 % pour une tension de commande sur la plage 50 volt à 2 000 volt, et de préférence inférieure à 5 % sur la plage 100 volt à 1 000 volt.
